Europäisches Patentamt

European Patent Office

Office européen des brevets

(11) Veröffentlichungsnummer: **0 424 684 A2**

# (12) EUROPÄISCHE PATENTANMELDUNG

(21) Anmeldenummer: 90118656.9

(22) Anmeldetag: 28.09.90

(51) Int. Cl.⁵: **B61H 7/12, B60T 7/12**

(30) Priorität: 27.10.89 DE 3935821

(43) Veröffentlichungstag der Anmeldung:
02.05.91 Patentblatt 91/18

(84) Benannte Vertragsstaaten:
DE ES FR GB

(71) Anmelder: Walter Becker GmbH
Barbarastrasse 12
W-6605 Friedrichsthal (Saar)(DE)

(72) Erfinder: **Siffrin, Horst**
Katharinenstrasse 3
W-6689 Merchweiler(DE)

(74) Vertreter: **Bernhardt, Winfrid, Dr.-Ing. et al**
Kobenhüttenweg 43
W-6600 Saarbrücken(DE)

(54) **Bremswagen einer Schienenflurbahn oder Schienenhängebahn des Bergbaues.**

(57) Ein Bremswagen einer Schienenflurbahn oder Schienenhängebahn des Bergbaues greift an die Schienen mit einer Klemmeinrichtung (3-15), die durch Federn (8) beaufschlagt ist, die im Normalbetrieb durch Hydraulikzylinder (11) gespannt sind. Im Bremsfall öffnet eine bei Überschreiten einer Geschwindigkeitsgrenze ansprechende Auslöseeinrichtung (33) ein die Druckräume (14) der Hydraulikzylinder (11) verschließendes Ventil (24).

Es ist eine Schaltung (18-60) derart vorgesehen, daß beim Greifen der Bremse (3,4) der Druckraum (14) wieder verschlossen (23) wird und, gesteuert von der Trägheitskraft einer in Fahrtrichtung beweglich angeordneten Masse (50), erneut ein hydraulischer Druck in dem Druckraum (14) erzeugt wird.

Damit wird die Bremsung in Abhängigkeit von der Last gesteuert.

## BREMSWAGEN EINER SCHIENENFLURBAHN ODER SCHIENENHÄNGEBAHN DES BERGBAUES

Die Erfindung betrifft einen Bremswagen einer Schienenflurbahn oder Schienenhängebahn des Bergbaues mit einer als Bremse an die Schienen greifenden Klemmeinrichtung, die durch mindestens eine Feder beaufschlagt ist, die im Normalbetrieb durch mindestens einen Hydraulikzylinder gespannt ist, und mit einer, insbesondere bei Überschreiten einer Geschwindigkeitsgrenze ansprechenden, Auslöseeinrichtung für das Öffnen eines den Druckraum des Hydraulikzylinders verschließenden Ventils.

Solche Bremswagen werden auf Untertage-Schienenbahnen den Zügen beigegeben für den Fall, daß die normalerweise vom Antrieb her erfolgende Bremsung ausfällt, d.h. die Bremseinrichtung eines Antriebswagens versagt oder ein Seiltrieb reißt oder seine Seiltrommel nicht mehr greift. Wird eine Geschwindigkeitsgrenze überschritten oder die Auslösung von Hand betätigt, so klemmen unter der Kraft der dann freigelassenen Feder(n) Bremsbacken einen Flansch der in der Regel aus U-Profil bestehenden Schienen zwischen sich ein und bringen mit dieser Bremsung den Zug zum Stillstand.

Die Federn sind so ausgelegt, daß sie einen Zug mit einer vollen Last von beispielsweise 20 t abbremsen können. Ist der Zug kleiner oder weniger beladen, steigt die Verzögerung beim Bremsen entsprechend an. Sie kann dann so stark werden, daß auf dem Zug fahrende Personen dadurch zu Schaden kommen.

Zur Lösung des Problems dient bisher ein Beladen des Zuges mit Ballast.

Der Erfindung liegt die Aufgabe zugrunde, die Bremsung in Abhängigkeit von der Last zu steuern.

Gemäß der Erfindung wird dieser Zweck bei einem Bremswagen der eingangs bezeichneten Art erfüllt durch eine Schaltung derart, daß beim Greifen der Bremse der Druckraum wieder verschlossen wird und, gesteuert von der Trägheitskraft einer in Fahrtrichtung beweglich angeordneten Masse, erneut ein hydraulischer Druck in dem Druckraum erzeugt wird.

Durch das Greifen der Bremse wird die Feder abgestützt und infolgedessen der Druckraum erst drucklos. Der Druck, der nach Verschließen des Druckraumes darin wieder erzeugt wird, verringert die Bremskraft. Die Verringerung ist umso größer, je größer die Trägheitskraft der genannten Masse, d.h. je stärker die Verzögerung vorher war.

Die Verzögerung steigt beim Bremsvorgang von null aus in einer umso steileren Kurve (und ohne die erfindungsgemäße Gegenkrafterzeugung auf eine umso größere Höhe) an, je kleiner das Gewicht des Zuges ist. Auch in dem ersten Zeitabschnitt des Bremsvorganges, der bis zu der erfindungsgemäßen Gegenkrafterzeugung vergeht, hat also immer die Verzögerung einen umso größeren Wert, je mehr Gegenkraft aufzubringen ist. Die Erfindung verwendet diese Relation mit dem Ergebnis, daß sie die Kurve nach der Waagerechten hin umlenkt, sobald der erneute Druck in dem Druckraum erzeugt ist.

Auch nach der Erfindung ergibt sich noch für kleinere Zuggewichte eine größere Verzögerung. Diese Verzögerung ist aber stark vermindert worden.

Das Ausmaß der Verminderung läßt sich in einer rein mechanischen Variante der Erfindung einrichten mit der Größe der genannten Masse und der Art und Weise, wie man diese Masse zur Wirkung kommen läßt.

In einer anderen Variante wird die Trägheitskraft gemessen und mit dem Meßwert, ggf. über einen Rechner, der erneute Druck gesteuert.

Zur Erzeugung und Steuerung des erneuten hydraulisches Druckes auf mechanischem Wege wird vorzugsweise die Trägheitskraft der genannten Masse in jeder der beiden Fahrtrichtungen durch einen kleinen Hydraulikzylinder abgestützt, dessen Druckraum mit dem Druckraum des erstgenannten Hydraulikzylinders verbunden ist.

Das ist eine einfache, unmittelbare Lösung. Sie ist ohne weiteres möglich, da nur Druckerzeugung und kein Volumenstrom gefragt ist. Es gilt ja nur, die Anpreßkraft der Bremsbacken zu vermindern, und nicht, sie abzuheben.

Nach einer besonders vorteilhaften Weiterbildung der Erfindung ist die genannte Masse als ein in den beiden Fahrtrichtungen (hin und zurück) bewegliches Pendel angeordnet, dessen lotrechte Ausrichtung frei ist und dessen Trägheitskraft, vorzugsweise über einen Zahnstangentrieb mit in dem Bremswagen verschiebbarer Zahnstange, abgestützt ist.

Diese Lösung läßt eine Verfälschung der angestrebten Steuerung durch Einwirkung der Schwerkraft der Masse auf Steigungen und Gefällen der Bahn entfallen. Das Pendel richtet sich immer frei lotrecht aus, und nur, wenn es infolge Bremsung eine Trägheitskraft entfaltet, wird diese wirksam.

Zweckmäßigerweise sind die beiden Zahnstangenenden auf die beiden kleineren Hydraulikzylinder abgestützt - vorzugsweise sind sie selbst als deren Kolben ausgebildet -, und die beiden kleinen Hydraulikzylinder sind jeweils über ein Rückschlagventil mit dem Druckraum des erstgenannten Hydraulikzylinders verbunden und vor dem Rückschlagventil durch eine Kurzschlußleitung miteinander verbunden, in der ein Ventil angeordnet ist, das gleichzeitig mit dem Öffnen des erstgenannten Ventils verschließbar ist.

Die Kurzschlußleitung erlaubt im Normalbetrieb die freie Verwinkelung der Zahnstange gegenüber dem lotrecht bleibenden Pendel auf Steigungen und Gefällen. Im Falle der Bremsung wird sie durch das in ihr angeordnete Ventil geschlossen. Dann wird die Verbindung des jeweils druckerzeugenden kleinen Hydraulikzylinders mit dem erstgenannten Hydraulikzylinder wirksam, während der andere kleine Hydraulikzylinder durch das betreffende Rückschlagventil abgeschlossen wird.

Die freie lotrechte Ausrichtung des Pendels, aber Abstützung seiner Trägheitskraft, könnte aber auch in einer anderen Weise erfolgen, die auf der langsamen Änderung der lotrechten Ausrichtung einerseits und der äußerst schnellen Bewegung infolge der Trägheit andererseits beruht.

Zu dem genannten Verschließen des Druckraumes ist zweckmäßigerweise ein Ventil zwischen das erstgenannte Ventil und den Druckraum geschaltet, das gegen eine Schließkraft durch den in Ausströmrichtung hinter ihm herrschenden Druck, vorzugsweise den zwischen ihm und dem erstgenannten Ventil herrschenden Druck, zu öffnen ist und im Normalbetrieb geöffnet ist.

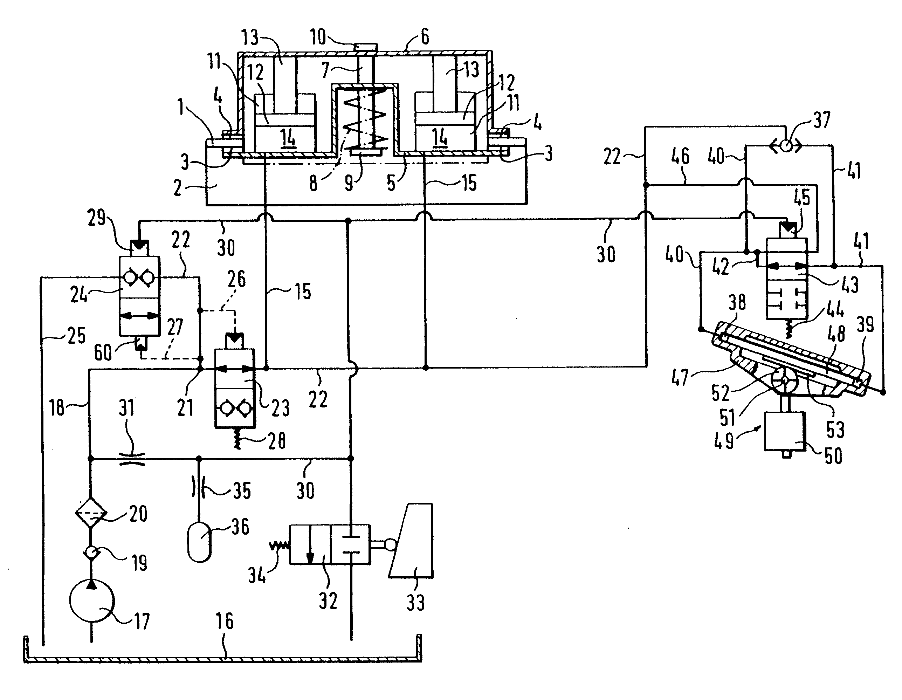

Die Zeichnung gibt ein Ausführungsbeispiel der Erfindung wieder.

Sie zeigt eine Bremsvorrichtung eines Bremswagens teils in schematisierter Darstellung und teils in einem hydraulischen Schaltplan.

Ein waagerechter Schenkel 1 einer Schiene 2 wird von unten und oben durch zwei Paare einander gegenüberliegender Bremsbacken 3 und 4 eingefaßt. Die beiden unteren Bremsbacken 3 sitzen an einem unteren Rahmen- oder Gehäuseteil 5, die beiden oberen Bremsbacken 4 an einem oberen Rahmen- oder Gehäuseteil 6.

Die beiden Rahmen- oder Gehäuseteile 5 und 6 werden durchsetzt von einem Zuganker 7 und stehen unter der Kraft einer Feder 8, die einerseits gegen einen am einen Ende des Zugankers 7 angeordneten Federteller 9 und andererseits gegen das untere Rahmen- oder Gehäuseteil 5 abgestützt ist; der Zuganker 7 liegt von der anderen Seite her an dem Rahmen- oder Gehäuseteil 6 mit einem Bund 10 an.
Beiderseits des Zugankers 7 und der Feder 8 sind auf dem unteren Rahmen-oder Gehäuseteil 5 zwei Hydraulikzylinder 11 mit Kolben 12 angeordnet, deren Kolbenstangen 13 von unten gegen das obere Rahmen- oder Gehäuseteil 6 gerichtet sind.

Die Hydraulikzylinder 11 sind einseitig wirkende. In ihren unter dem Kolben 12 befindlichen Druckraum 14 münden Einführungs- und Auslaufleitungen 15 für das Druckmittel.

Der Einführung des Druckmittels dient eine aus einem Reservoir 16 gespeiste, von Hand oder durch einen Pneumatikmotor betätigte Pumpe 17.

Von der Pumpe 17 führt zunächst eine Leitung 18 durch ein Rückschlagventil 19 und ein Filter 20 zu einem Anschlußpunkt 21. Von da führt eine Leitung 22 größeren Querschnitts durch ein Ventil 23 hindurch weiter. An die Leitung 22 sind die Einführungs- und Auslaufleitungen 15 angeschlossen.

Andererseits führt die Leitung 22 von dem Anschlußpunkt 21 aus weiter durch ein Ventil 24 in eine in das Reservoir 16 ausmündende Rücklaufleitung 25. Auf dem letzteren Abschnitt zweigen von der Leitung 22 eine Steuerleitung 26 zu dem Ventil 23 und eine Steuerleitung 27 zu dem Ventil 24 ab. Die Steuerleitung 26 hält bei Beaufschlagung mit Druck das Ventil 23 in Öffnungsstellung gegen die Kraft einer Feder 28, die bei Wegfall des Druckes das Ventil 23 in Schließstellung verschiebt. Die Steuerleitung 27 , genauer ein kleinerer Steuerzylinder 60, verschiebt das Ventil 24 in Öffnungsstellung, wenn an diesem der Druck auf einen entgegengerichteten, größeren Steuerzylinder 29 wegfällt, der das Ventil 24 im Normalbetrieb geschlossen hält.

Der Steuerzylinder 29 ist beaufschlagt durch eine Steuerleitung 30. Diese zweigt ab von der Leitung 18, wobei sie durch eine Drossel 31 führt, und kann in das Reservoir 16 hinein geöffnet werden durch ein im Normalbetrieb geschlossenes Ventil 32, das bei Freigabe durch eine Auslöseeinrichtung 33 unter der Kraft einer Feder 34 öffnet. Ein über eine Drossel 35 an die Steuerleitung 30 angeschlossener Druckspeicher 36 dient dem Ausgleich eventueller Leckverluste.

Die Leitung 22 führt hinter der Abzweigung der beiden Einführungs- und Auslaufleitungen 15 zu einem doppelt wirkenden Rückschlagventil 37 und teilt sich dort in zwei zu zwei kleinen Hydraulikzylindern 38 und 39 führende Zweigleitungen 40 und 41.

Die beiden Zweigleitungen 40 und 41 sind durch eine Kurzschlußleitung 42 verbunden, in der ein Ventil 43 angeordnet ist. Mittels des Ventils 43 ist die Kurzschlußleitung 42 unter der Wirkung einer Feder 44 verschließbar. Im Normalbetrieb hält jedoch ein Steuerzylinder 45 das Ventil 43 gegen die Feder 44 geöffnet. Der Steuerzylinder 45 ist parallel zu dem Steuerzylinder 29 an die Steuerleitung 30 angeschlossen.

Über das Ventil 43 ist die Kurzschlußleitung 42 ferner im Normalbetrieb durch eine Leitung 46 mit der Leitung 22 verbunden und im Falle der Sperrung der Kurzschlußleitung 42 von der Leitung 22 abgesperrt.

Die beiden kleinen Hydraulikzylinder 38 und 39 sind einander gegenüber in einer Baueinheit 47 eingerichtet mit einer gemeinsamen Kolbenstange 48, deren beide Enden als Kolben in den kleinen Hydraulikzylindern verschiebbar geführt sind.

Unter der Kolbenstange 48 ist in der Baueinheit 47 ein Pendel 49 mit einer Masse 50 an einer Achse 51 aufgehängt, und zwar mit einer auf der Achse 51 gelagerten Zahnscheibe 52. Die Zahnscheibe 52 greift in eine an der Kolbenstange 48 angebrachte Zahnleiste 53.

Die Baueinheit 47 ist so an oder in dem Bremswagen angeordnet, so daß sie dessen Neigung an Steigungen und Gefällen annimmt. Das Pendel 49 bleibt dabei jedoch senkrecht.

Zur Inbetriebnahme des Bremswagens wird durch die Pumpe 17 Hydraulikflüssigkeit aus dem Reservoir 16 in die Druckräume 14 der Hydraulikzylinder 11 gepumpt. Dabei kann das Ventil 24 zunächst durch eine nicht gezeichnete, mechanische Sperre in seiner Schließstellung gehalten werden, während das Ventil 23 unter dem Druck der durch die Leitung 18 am Anschlußpunkt 21 in die Leitung 22 eingespeisten Hydraulikflüssigkeit über die Steuerleitung 26 gegen die Kraft der Feder 28 geöffnet wird. Sobald sich jedoch durch die Drossel 31 hindurch voller Druck in der Steuerleitung 30 aufgebaut hat, erhält das Ventil 24 die erforderliche Schließkraft statt von der mechanischen Sperre durch den Steuerzylinder 29, der eine größere Kolbenfläche als der entgegengerichtete, durch die Steuerleitung 27 beaufschlagte Steuerzylinder hat. Die Steuerleitung 30 wird durch das Ventil 32 und die Auslöseeinrichtung 33 geschlossen gehalten.

Ein Zweig der Steuerleitung 30 öffnet über den Steuerzylinder 45 das Ventil 43 und hält es gegen die Kraft der Feder 44 in geöffneter Stellung. Durch die Leitung 22 und die Zweigleitungen 40 und 41 setzt sich der hydraulische Druck in die kleinen Hydraulikzylinder 38 und 39 hinein fort.

Haben die Kolben 12 der Hydraulikzylinder 11 das untere Rahmenoder Gehäuseteil 5 und das obere Rahmen- oder Gehäuseteil 6 so 1 weit auseinandergedrückt, daß die Bremsbacken 3 und 4 einen genügenden Abstand von dem Schenkel 2 der Schiene 1 einnehmen, wird der Pumpvorgang beendet und der erreichte Zustand durch das Rückschlagventil 19 festgehalten.

Verwinkelt sich an Steigungen und Gefällen die Baueinheit 47 gegenüber dem senkrecht bleibenden Pendel 49 und verschiebt sich infolgedessen durch den Zahntrieb 52,53 die Kolbenstange 48 in der einen oder anderen Richtung, so fließt die im einen kleinen Hydraulikzylinder 38 oder 39 verdrängte Flüssigkeit durch die Kurzschlußleitung 42 in den anderen kleinen Hydraulikzylinder 39 bzw. 38.

Tritt der Bremsfall ein, so gibt die Auslöseeinrichtung 33 das Ventil 32 frei, das nun durch seine Feder 34 geöffnet wird. Der Druck entweicht aus allen Zweigen der Steuerleitung 30; die Drosseln 31 und 35 verhindern ein wesentliches Nachströmen. Der infolge der Spannung der Feder 8 in der Leitung 22 weiterhin vorhandene Druck öffnet nun über die Steuerleitung 27 das Ventil 24, so daß die Hydraulikflüssigkeit aus den Druckräumen 14 über die Leitungen 15, 22 und die Rücklaufleitung 25 ausfließen kann.

Setzen die Bremsbacken 3 und 4 an dem Schenkel 2 der Schiene 1 auf, stützt sich die Federkraft auf diesen ab und der Druck in den Druckräumen 14 und den Leitungen 15 und 22 bricht zusammen, desgleichen in der Steuerleitung 26. In diesem Augenblick schließt die Feder 28 das Ventil 23.

Gleichzeitig damit bewegt sich durch die von den Bremsbacken 3 und 4 ausgeübte Bremsung das Pendel 49 aufgrund der Trägheit seiner Masse 50 in der Fahrtrichtung weiter und verschiebt die Kolbenstange 48. Da vorher schon, nämlich zusammen mit dem Öffnen des Ventils 24 infolge des Druckabfalles in der Steuerleitung 30 das Ventil 43 durch seine Feder 44 geschlossen worden ist, erzeugt nun der betreffende kleine Hydraulikzylinder 38 oder 39 einen durch das doppelt wirkende Rückschlagventil 37 gegen den jeweils anderen kleinen Hydraulikzylinder 39 bzw. 38 abgesperrten, in die Leitung 22 und damit in die Druckräume 14 wirkenden Druck.

Damit wird die von der Feder 8 ausgeübte Bremskraft vermindert. Die Verminderung ist umso größer, je stärker die Bremskraft war, weil dann die Trägheitskraft des Pendels 49 auch entsprechend größer ist.

## Ansprüche

1. Bremswagen einer Schienenflurbahn oder Schienenhängebahn des Bergbaues mit einer als Bremse (3,4) an die Schienen greifenden Klemmeinrichtung (3-15), die durch mindestens eine Feder (8) beaufschlagt ist, die im Normalbetrieb durch mindestens einen Hydraulikzylinder (11) gespannt ist, und mit einer, insbesondere bei Überschreiten einer Geschwindigkeitsgrenze ansprechenden, Auslöseeinrichtung (33) für das Öffnen eines den Druckraum (14) des Hydraulikzylinders (11) verschließenden Ventils (24), gekennzeichnet durch eine Schaltung (18-60) derart, daß beim Greifen der Bremse (3,4) der Druckraum (14) wieder verschlossen (23) wird und, gesteuert von der Trägheitskraft einer in Fahrtrichtung beweglich angeordneten Masse (50), erneut ein hydraulischer Druck in dem Druckraum (14) erzeugt wird.

2. Bremswagen nach Anspruch 1, dadurch gekennzeichnet, daß zu dem genannten Verschließen des Druckraumes (14) ein Ventil (23) zwischen das erstgenannte Ventil (24) und den Druckraum (14) geschaltet ist, das gegen eine Schließkraft (28) durch den in Ausströmrichtung hinter ihm herrschenden Druck, vorzugsweise den zwischen ihm und dem erstgenannten Ventil (24) herrschenden Druck (26), zu öffnen ist und im Normalbetrieb geöffnet ist.

3. Bremswagen nach Anspruch 1 oder 2,
dadurch gekennzeichnet,
daß zur Erzeugung und Steuerung des erneuten hydraulischen Druckes die Trägheitskraft der genannten Masse (50) in jeder der beiden Fahrtrichtungen durch einen kleinen Hydraulik zylinder (38;39) abgestützt ist, dessen Druckraum mit dem Druckraum (14) des erstgenannten Hydraulikzylinders (11) verbunden (15,22, 40 bzw. 41) ist.

4. Bremswagen nach einem der Ansprüche 1 bis 3,
dadurch gekennzeichnet,
daß die genannte Masse (50) als ein in den beiden Fahrtrichtungen bewegliches Pendel (49) angeordnet ist, dessen lotrechte Ausrichtung frei ist und dessen Trägheitskraft,vorzugsweise über einen Zahnstangentrieb (52,53) mit in dem Bremswagen verschiebbarer Zahnstange (48,53), abgestützt ist.

5. Bremswagen nach den Ansprüchen 3 und 4,
dadurch gekennzeichnet,
daß die beiden Zahnstangenenden auf die beiden kleinen Hydraulikzylinder (38;39) abgestützt sind, vorzugsweise selbst als deren Kolben ausgebildet sind, und die beiden kleinen Hydraulikzylinder (38;39) jeweils über ein Rückschlagventil (37) mit dem Druckraum (14) des erstgenannten Hydraulikzylinders (11) verbunden (15,22,40 bzw. 41) sind und vor dem Rückschlagventil (37) durch eine Kurzschlußleitung (42) miteinander verbunden sind, in der ein Ventil (43) angeordnet ist, das gleichzeitig mit dem Öffnen des erstgenannten Ventils (24) schließbar ist.

6. Bremswagen nach Anspruch 5,
dadurch gekennzeichnet,
daß das erstgenannte (24) und das letztgenannte (43) Ventil hydraulisch gesteuert sind durch verbundene Steuerleitungen (30), die im Normalbetrieb das erstgenannte Ventil (24) gegen eine Gegenkraft (24) geschlossen und das letztgenannte Ventil (43) gegen eine Gegenkraft (44) geöffnet halten und durch die genannte Auslöseeinrichtung (33) zu entspannen sind.

7. Bremswagen nach den Ansprüchen 2 und 6,
dadurch gekennzeichnet,
daß die Fülleitung (18) des Systems in die Verbindungsleitung (22) zwischen dem erstgenannten (24) und dem zweitgenannten (23) Ventil mündet (21) und die genannten Steuerleitungen (30) über eine Drossel (31) an die Fülleitung (18) angeschlossen sind und diese davor im Normalbetrieb durch ein Rückschlagventil (19) verschlossen ist.

EP 0 424 684 A2